(19) **Europäisches Patentamt / European Patent Office / Office européen des brevets**

(11) **EP 1 998 253 A1**

(12) **EUROPEAN PATENT APPLICATION**

(43) Date of publication:
**03.12.2008 Bulletin 2008/49**

(51) Int Cl.:
***G06F 9/45*** *(2006.01)*

(21) Application number: **07009438.8**

(22) Date of filing: **10.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **SIEMENS AKTIENGESELLSCHAFT 80333 München (DE)**

(72) Inventor: **The designation of the inventor has not yet been filed**

(54) **System and method for detection of opportunities for refactoring in an object-oriented program**

(57)   The present invention deals with a technique for detecting opportunities for refactoring in an object-oriented program. The proposed technique includes identifying low-cohesive members of classes contained in said object-oriented program and forming a set of low-cohesive members. Based upon an ordering function, a low-cohesive member is selected from the set of low-cohesive members, in preference to other low-cohesive members contained in said set. A destination class is then determined and suggested to the user for moving the selected low-cohesive member from its source class. The destination class is determined based upon optimization of a cohesion characteristic of said object-oriented program.

FIG 1

**Description**

The present invention relates object-oriented programming, in particular for enhancing cohesion and reducing coupling a control program of an industrial automation system.

In object-oriented programming, it is desirable that all the members of a class should be related to each other and less dependent on members of other classes in the program. The former property of an object-oriented program is referred to as 'cohesion', while the latter is referred to as 'coupling.' However, it has been observed by researchers that the above properties, namely high cohesion and low coupling, are not really satisfied by many object-oriented programs in practice. It is important that object-oriented programs satisfy these properties as maintenance and defect detection can become simpler. This can be achieved by refactoring tools that transform (refactor) the classes such that the resulting programs satisfy the properties of cohesion and coupling better than the original program.

Presently, refactoring tools and methods are known that rely on the user guiding the tool by suggesting explicitly the members of classes to be moved to chosen destination classes, so that the resulting classes may be more cohesive and exhibit less coupling. The refactoring tools provide an automated capability to carry out refactorings such as Move Method or Move Attribute(or field) on the input classes once the user specifies which method or attribute should be moved from a given source class to a destination class.

For example, the article Simon, F. Steinbruckner, and C. Lewerentz, "Metrics Based Refactoring", Proc. 5th European Conference on Software Maintenance and Reengineering, pages 30-38, IEEE, Los Alamitos, 2001, describes a metrics based refactoring approach.

However, the harder problem of automatically detecting the members of classes that violate the properties of cohesion and coupling is not addressed by known refactoring tools.

It is an object of the present invention to provide an improved system and method for enhancing cohesion and reducing coupling in an object-oriented program.

The above object is achieved by a method for rearranging an object-oriented program, comprising the steps of:

    a) identifying low-cohesive members of classes contained in said object-oriented program and forming a set of low-cohesive members;
    b) based upon an ordering function, selecting a low-cohesive member from said set of low-cohesive members, in preference to other low-cohesive members contained in said set,
    c) determining a destination class for moving said selected low-cohesive member from its source class, said destination class being determined based upon optimization of a cohesion characteristic of said object-oriented program,
    d) removing said selected low-cohesive member from said set of low-cohesive members, and
    e) repeating steps b), c) and d) for remaining low-cohesive members in said set of low-cohesive members.

The above object is achieved by a system for rearranging an object-oriented program, comprising:

    means for identifying low-cohesive members of classes contained in said object-oriented program and forming a set of low-cohesive members;
    means for selecting a low-cohesive member from said set of low-cohesive members, in preference to other low-cohesive members contained in said set, based upon an ordering function, and
    means for determining a destination class for moving said selected low-cohesive member from its source class, based upon optimization of a cohesion characteristic of said object-oriented program.

The underlying idea of the present invention is to automatically detect classes in an object-oriented program wherein the properties of high cohesion and low coupling are not satisfied. The present invention further provides a solution to the user to transform or refactor the members that do not satisfy the above properties in their current class into such classes that satisfy the above properties better. The resulting program would hence satisfy the properties of cohesion and coupling better than the original program.

In one embodiment, the step of identifying low-cohesive members of a class comprises determining an average distance of a member with respect to other members in said class, and identifying a member as low-cohesive if the average distance exceeds a specified value, wherein average distance between two members x and y is defined by following relationship:

$$\texttt{distance(x,y) = |p(x)} \cap \texttt{p(y)|/| p(x)} \cup \texttt{p(y)|,}$$

wherein

the function p(x) is defined by
p(x), if x is a method = {x, all directly used methods, all directly used attributes},
p(x), if x is an attribute = {x, all methods using it}. The above feature provides particularly effective means for identifying low-cohesive members using a similarity property of the member with respect to other members in the same class.

In another embodiment, the step of identifying low cohesive members of a class is based upon the determination of a cohesion-coupling ratio for each member of said class, wherein cohesion-coupling ratio for a member x in class C is defined by the following relationship:

$$\texttt{cohesion-coupling ratio(x,C) = } |\texttt{p(x)} \cap \texttt{M'(C)}|/|\texttt{p(x)} - \texttt{M'(C)}|,$$

wherein
M(C) refers to the set of members of class C,

$$\texttt{M'(C) = M(C) - \{x\},}$$

and
the function p(x) is defined by
p(x), if x is a method = {x, all directly used methods, all directly used attributes},
p(x), if x is an attribute = {x, all methods using it}.
The above technique aids in identifying low-cohesive members, as members exhibiting low cohesion properties and higher coupling properties have lower values for cohesion-coupling ratio.

In one embodiment, the ordering function is adapted for computing a dependency ratio of all low-cohesive members in said set of low-cohesive members and selecting a low-cohesive member having the least dependency ration for movement to a destination class, wherein dependency ratio for a member A of said set of low-cohesive members is defined by the following relationship:

$$\texttt{dependency ratio(A)} = \Sigma_{\texttt{y} \in \texttt{set-lcm}} ( |\texttt{p(A)} \cap \texttt{p(y)}| / |\texttt{p(A)}| ) / |\texttt{set-lcm}|,$$

wherein
set-lcm refers to said set of low-cohesive members, and
y is any member belonging to set-lcm.
The above feature advantageously facilitates preferential selection of a low-cohesive member for subsequent refactoring that has the least similarity or the highest net distance to other members in the set of low-cohesive members in the entire object-oriented program

In a further embodiment, said destination class is identified such that the difference between total cohesion of the source class and the destination class after moving said selected low-cohesive member to said destination class and total cohesion of the source class and the destination class before moving said selected low-cohesive member is maximum compared to that determined for any other class. The above feature advantageously facilitates maximum increase in cohesion in the source class and the destination class after refactoring a low-cohesive member from its source class to the destination class.

In an alternate embodiment, the ordering function is adapted for selecting a low-cohesive member, which, on being moved from its source class to a destination class, would result in maximum reduction of disparateness values of the source class and the destination class, wherein disparateness of a class C is defined by the following relationship:

$$\texttt{Disparateness(C)} = \Sigma_{\texttt{x} \in \texttt{M(C)}} \texttt{Distance(x,C)}/|\texttt{M(C)}| + \Sigma_{\texttt{y} \in \texttt{set-external(C)}} \texttt{Distance (y,C)}/|\texttt{set-external(C)}|,$$

wherein

M(C) refers to the set of members of class C, and

set-external(C) is defined as the set of members of classes other than members of C to which there exist invocations from methods in class C.

The above feature facilitates preferential selection of low-cohesive members by measuring the degree of 'non-sharing' among members of a class C and the average distance of members in the set of members belonging classes other than class C to which there exist references or invocations from methods in class C.

In a further embodiment, said destination class is identified such that the difference between total disparateness of the source class and the destination class after moving said selected low-cohesive member to said destination class and total disparateness of the source class and the destination class before moving said selected low-cohesive member is negative and minimum compared to that determined for any other class.

In another alternative embodiment, the ordering function is based upon a relationship given by

$$\text{DR'}(x) = |\text{p'}(x) \cap \text{set-lcm}| \; / \; |\text{set-lcm}|,$$

wherein set-lcm represents the set of low-cohesive members identified by calculating cohesion-coupling ratio, and wherein said method further comprises selecting a low-cohesive member in set-lcm for which DR'(x) is least, for movement to a destination class. The above feature facilitates preferential selection of a low-cohesive member for refactoring to a destination class from its source class.

In a further embodiment, said destination class is identified such that the increase in the cohesion-coupling ratio with respect to the selected low-cohesive member being moved and the identified destination class is maximum in comparison to the cohesion-coupling ratio if the said selected low-cohesive element was moved to any other class. The above feature advantageously increases the cohesion-coupling ratio values in the object-oriented program after refactoring a low-cohesive member from its source class to the destination class.

In a preferred embodiment, the proposed system belongs to an industrial automation system, said object-oriented program comprises a control program generated by an engineering system of said industrial automation system.

The present invention is further described hereinafter with reference to illustrated embodiments shown in the accompanying drawings, in which:

FIG 1 is a flowchart illustrating a method for rearranging an object-oriented program by identifying refactoring opportunities in the program,

FIG 2 is a flowchart illustrating an embodiment of the present invention to identify refactoring opportunities based upon computation of dependency ratio,

FIG 3 is a flowchart illustrating an embodiment of the present invention to identify refactoring opportunities based upon computation of disparateness value, and

FIG 4 is a flowchart illustrating an embodiment of the present invention to identify refactoring opportunities based upon computation of cohesion-coupling ratio.

In the context of the present discussion, the term 'cohesion' refers to a property that represents the extent to which members of a class are related to each other, while the term 'coupling' refers to a property that represents the extent to which members of a class are dependent on members of other classes in the program. Further, as would be familiar to one skilled in the art, the term 'member' is used to refer to any method or attribute/field in an object-oriented program.

The techniques described hereinafter provide an automated framework for identifying members of different classes in an object-oriented program that violate the properties of high cohesion / low coupling and also automatically identify appropriate destination classes for the violating members to be moved from their current classes.

Illustrated embodiments of the present invention deal with a refactoring tool that can carry out the analysis of an object-oriented program written, for example, in C# or Java or C++, and makes a suggestion to the user about the list of low-cohesive members that do not belong to their current classes and determines the destination classes where the identified members belong. The user decides if a particular low-cohesive method should be moved from its current class to the identified destination class. Thus the proposed tool suggests to the user about a sequence of movement of members to destination classes, which when carried out, results in a program that satisfies the properties of enhanced cohesion and reduced coupling. Such programs are easier to understand, extend, debug and maintain.

The present invention thus focuses on the problem of suggesting a sequence of refactorings to the user, given an object-oriented program. In the embodiments illustrated below, a sequence of refactorings such as 'Move method' are determined and suggested to the user. However, a similar methodology with appropriate modifications may be used for detecting 'Move Field' or 'Move Attribute' refactorings in an object-oriented program.

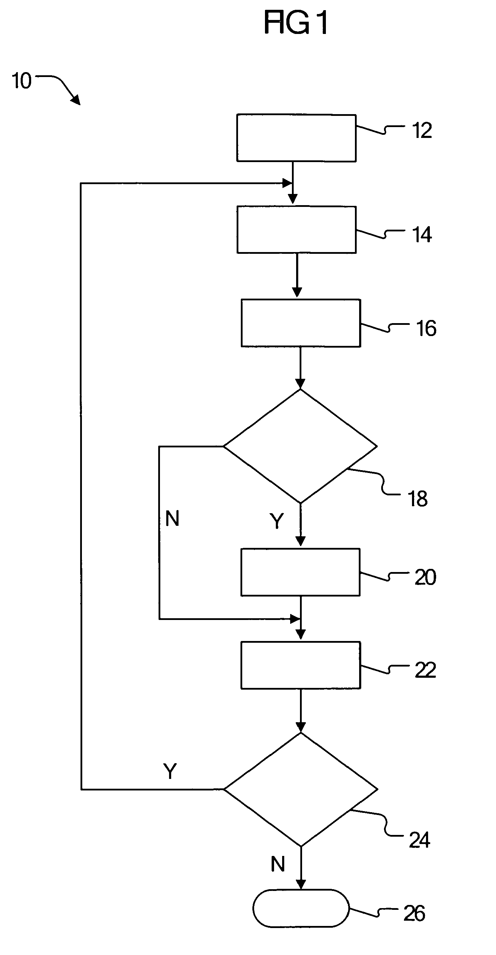

FIG 1 illustrates a method 10 for rearranging an object-oriented program by identifying refactoring opportunities in the program. The method 10 begins at step 12 by identifying low-cohesive members of classes in the object-oriented program. A low-cohesive member of a class is one that does not quite belong to its present class thereby lowering cohesion and introducing dependency on other classes (coupling). A low-cohesive method of a class is weakly related to other methods of the class, i.e., they do not access it much or do not share many member variables of the class with the low-cohesive method. Step 12 further includes forming a set of identified low-cohesive members. Let this set be designated as set-lcm.

At step 14, a low-cohesive member from set-lcm is selected in preference to other low-cohesive members of set-lcm based for refactoring to another class (destination class) from its source class. The selection at step 14 is carried out using an ordering function which is described in greater detail in the latter sections. Next, at step 16, destination class is determined for moving the low-cohesive member selected at step 14 from its source class. The destination class is determined based upon optimization of a cohesion characteristic of the given object-oriented program.

At step 18, a suggestion is made to the user to refactor the low-cohesive member selected in step 14 to the destination class determined at step 16. In the illustrated embodiment, step 16 includes a suggestion for a 'Move method' refactoring operation. If the suggestion is rejected, control goes to step 22 (discussed below). If the suggestion is accepted, the method proceeds at step 20 to carry out the refactoring operation for the selected low-cohesive member from the source class to the identified destination class. At step 22, the low-cohesive member selected at step 14 is removed from set-lcm. Step 24 includes a check to determine whether there are any low-cohesive members remaining in set-lcm. If the condition is satisfied, the control returns to step 14. If, on the other hand, the set set-lcm is empty or consists of only those low-cohesive members that do not possess a high similarity towards any other class (and hence remain in their current classes), the method 10 terminates at step 26.

The above-described method may be implemented by three algorithms, described hereinafter, that are based on heuristics and are essentially based on the steps described in FIG 1.

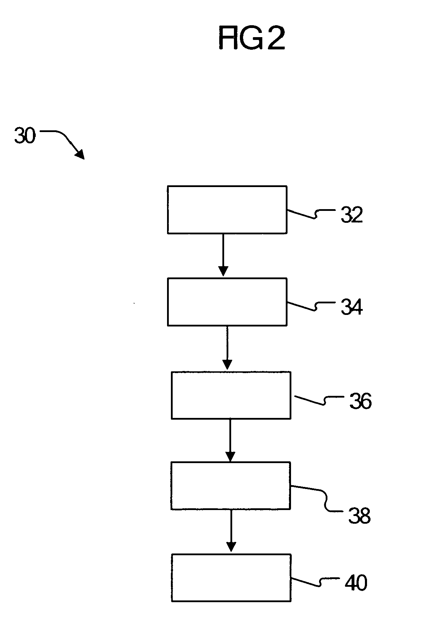

FIG 2 illustrates a method 30 that uses an ordering function called the dependency ratio over the computed set of low-cohesive members in the classes of an object-oriented program to select a low-cohesive method to be moved out of its current class. The destination class for movement is primarily determined based on whether the movement improves cohesion.

Referring to FIG 2, the method 30 begins at step 32 by identifying low-cohesive members of classes contained in the object-oriented program and forming a set of low-cohesive members, designated herein as set-lcm. This means that given classes $C_1 \ldots C_n$ in a program P, a set set-lcm is formed of low-cohesive members present in classes $C_1 \ldots C_n$. Identification of low cohesive members of a class $C_i$ is achieved by using the similarity property of a member with respect to other members of class $C_i$ that may be based, for example on the average distance of a member with respect to other members of class $C_i$. In the illustrated embodiment, the average distance between two members x and y is defined below by the relationship (1):

$$\texttt{distance(x,y)} \ = \ |p(x) \ \cap \ p(y)|/|\ p(x) \ \cup \ p(y)| \qquad\qquad -(1)$$

In the context of the present discussion, the function p(x) is defined by:

p(x) , if x is a method = {x, all directly used methods, all directly used attributes},
p(x) , if x is an attribute = {x, all methods using it}.

If the average distance is higher than a specified value, the similarity of the considered member to class $C_i$ or other members of class $C_i$ is considered to be low. Such a member of a class is low-cohesive. It should be noted that similarity is defined with respect to sharing of members. For example, if a method ml accesses instance variables x,y, z and m2 accesses x,y,u , then methods m1 and m2 are more similar than being dissimilar.

Step 34 involves determining the member x of set-lcm that has the least dependency ratio (defined below) in an attempt to suggest to the user to move it to a suitable destination class before other low-cohesive members are suggested for movement. The dependency ratio used in the present method is the ordering function over the set set-lcm of low-cohesive members. Computation of dependency ratio helps determine which low-cohesive method of set-lcm should be moved first to its potential destination class in preference to other methods of set-lcm. The present embodiment is based on the idea that preference for movement to that member of the set of low-cohesive members should be given which has the least net similarity or the highest net distance to other members of the set of low-cohesive members in the entire object-oriented program. Dependency ratio for a member A of said set of low-cohesive members is defined below by the relationship (2) :

$$\text{dependency ratio}(A) = \Sigma_{y \in \text{set-lcm}} (\ |p(A) \cap p(y)| \ / \ |p(A)| \ ) \ / \ |\text{set-lcm}| \qquad -(2)$$

Dependency ratio may be alternately defined below by the relationship (3) for improving performance:

$$\text{dependency ratio}(A) = (\ p'(A) \cap p(\ \text{set-lcm} - \{A\}\ )\ ) \ / \ p'(A) \qquad -(3)$$

wherein
set-lcm refers to said set of low-cohesive members, and y is any member belonging to set-lcm.
Step 36 involves determining a destination class for moving the selected low-cohesive member from its source class. To identify a destination class $C_{dst}$, from the set of classes Cl..Cn, for the low-cohesive member x to be moved into from its Source class $C_{src}$, the rule or condition is given below:

[Cohesion ($C_{src}$)+Cohesion ($C_{dst}$)] after moving x into $C_{dst}$ minus
[Cohesion($C_{src}$)+Cohesion($C_{dst}$)] before moving x into $C_{dst}$, is maximum for $C_{dst}$ in Cl..Cn, where n is the number of classes in the program.

At step 38, the destination class $C_{dst}$ determined at step 36 is suggested to the user for movement of the selected low-cohesive member from the source class $C_{src}$. Once the user confirms movement of the selected low-cohesive member x into the destination class $C_{dst}$, the subsequent computations are carried out assuming that x is now a member of $C_{dst}$. If based on the above condition , it is determined that the destination class is the same as the source class $C_{srct}$ then x will be flagged as a member for which no destination class could be identified and the low-cohesive member remains in its current class itself $C_{src}$.
At step 40, the selected low-cohesive member is removed from set-lcm. Steps 34, 36 and 38 are repeated until the set set-lcm of low-cohesive methods is empty or consists of only those low-cohesive members that do not possess a high similarity towards any other class (and hence remain in their current classes).

Example 1

Program 1 below represents a sample program to illustrate the working of the method 30 described in FIG 2.

Program 1

```
class ClassA {
    public int attributeA1;
    public int attributeA2;
    public int attributeA3;
    private ClassB b;

    public ClassA(){
        b = new ClassB();
    }

    public void methodA1() {
        attributeA1=0;
        methodA2();
    }
```

```
     public void methodA2() {
          b.attributeB1 = 0;
          b.attributeB2 = 0;
          b.methodB2 ( ) ;
     }

     public void methodA3() {
          attributeA1 = 0;
          attributeA2 = 0;
          methodA1();
          methodA2();
     }
}

class ClassB {
     public int attributeB1;
     public int attributeB2;
     private ClassA a;
     public ClassB ( ) {
          a = new ClassA ( ) ;
     }

     public void methodB1() {
          a.attributeA1 = 0;
          a.attributeA2 = attributeB1;
          a.attributeA2 = 0;
          a.attributeA3 = 0;
          a.methodAl();
     }

     public void methodB2() {
          attributeB1 = 0;
          attributeB2 = a.attributeA3;
     }
     public void methodB3() {
          attributeB1 = a.attributeA3;
          methodB2();
     }
}

class ClassC {
     public int attributeC1;
     private ClassB b;
     private ClassA a;
     public ClassC() {
          a = new ClassA();
          b = new ClassB();
     }

     public void methodC1 () {
          b.methodB1();
          a.attributeA1 = 0;
     }

     public void methodC2 () {
          methodC1();
          attributeC1 = 0;
     }
}
```

The method 30 described in FIG 2 works as follows and suggests move method refactorings as shown below.

Iteration1 : set-lcm = {A::methodA2, B::methodB1, C::methodC1}

7

- - - - - - - - - - - -

Dependency Ratio(A::methodA2) = 1/3
Dependency Ratio(B::methodB1) = 2/5
Dependency Ratio(C::methodC1) = 1

The method suggests to the user to move method A::methodA2 from class A to destination class B
Iteration2 : set-lcm = {B::methodB1, C::methodC1}
- - - - - - - - - - - -

Dependency Ratio(B::methodB1) = 1/5
Dependency Ratio(C::methodC1) = 1

The method suggests to the user to move method B::methodB1 to destination class A.
Iteration3 : set-lcm = {C::methodC1}
- - - - - - - - - - - -
Dependency Ratio(C::methodC1) = 0

The method suggests to the user to move method C::methodC1 to destination class A.

Program 2 below represents a modified version of program 1 when the user accepts the move method refactorings suggested above.

Program 2

```
class ClassA {
    public int attributeA1;
    public int attributeA2;
    public int attributeA3;
    private ClassB b;

    public ClassA() {
        b = new ClassB();
    }

    public void methodA1() {
        attributeA1=0;
        methodA2();
    }

    public void methodB1() {
        attributeA1 = 0;
        attributeA2 = b.attributeB1;
        attributeA2 = 0;
        attributeA3 = 0;
        methodA1();
    }

    public void methodC1 () {
        methodB1();
        attributeA1 = 0;
    }

    public void methodA2() {
        b.methodA2();
    }

    public void methodA3() {
        attributeA1 = 0;
        attributeA2 = 0;
```

```
        methodA1();
        methodA2();
    }
}

class ClassB {
    public int attributeB1;
    public int attributeB2;
    private ClassA a;

    public ClassB(){ {
        a = new ClassA();
    }

    public void methodA2() {
        attributeB1 = 0;
        attributeB2 = 0;
        methodB2();
    }

    public void methodB1() {
        a.methodB1() ;
    }

    public void methodB2() {
        attributeB1 = 0;
        attributeB2 = a.attributeA3;
    }
    public void methodB3() {
        attributeB1 = a.attributeA3;
        methodB2();
    }
}

class ClassC {
    public int attributed;
    private ClassB b;
    private ClassA a;
    public ClassC() {
        a = new ClassA();
        b = new ClassB () ;
    }

    public void methodC1 () {
        a.methodC1();
    }

    public void methodC2 () {
        methodC1();
        attributeC1 = 0;
    }
}
```

The above-described method 30 thus helps to determine the order in which low-cohesive members should be moved to the identified destination classes so that overall the cohesiveness of classes in the resulting program is enhanced and coupling reduced. When a method is moved from a source class to a destination class, a delegate is introduced into the source class.

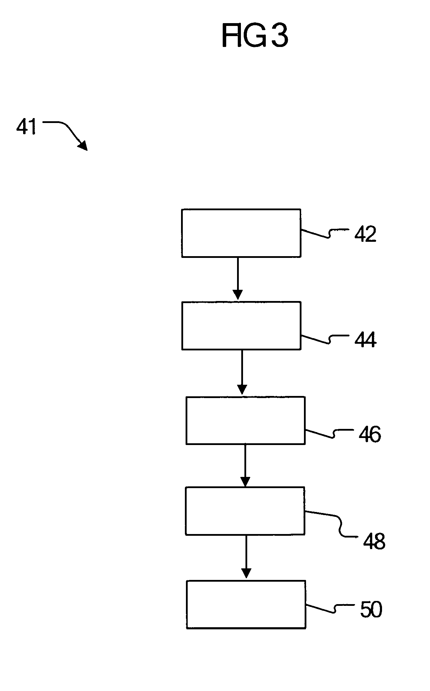

An alternative embodiment of the present invention is represented by a method 41 described with reference to FIG 3. The method 41 also computes the set of low-cohesive methods in all the classes of the program. It further uses a net disparateness function value over the source class and destination class, before and after movement, over all low-cohesive methods and all relevant classes to decide the low-cohesive method to be moved next from its current class. The net disparateness is also used to identify the destination class.

Referring now to FIG 3, the method 41 begins at step 42 by identifying low-cohesive members (methods, in the illustrated embodiment) of classes contained in the object-oriented program and forming a set of low-cohesive members, designated herein as set-lcm. As before, identification of low cohesive members of a class $C_i$ may be achieved by using the similarity property of a member with respect to other members of class $C_i$, or, based on the average distance of a member with respect to other members of class $C_i$. If the distance is high, the similarity of the considered member to class $C_i$ or other members of class $C_i$ is low. Such a member of a class is considered to be low-cohesive.

Step 44 involves selecting a low-cohesive method for movement using an ordering function. The ordering function used for selecting a low-cohesive method from set-lcm (and moving it to a destination class) is based on the changes in disparateness of classes in program. The low-cohesive method that reduces disparateness of source and destination classes maximum is moved first. Disparateness of a class C is defined below by the following relationship (4):

$$\text{Disparateness(C)} = \Sigma_{x \in M(C)} \text{Distance}(x,C) / |M(C)| + \Sigma_{y \in set-external(C)} \text{Distance } (y,C) / |set\text{-}external(C)|, \qquad - (4)$$

In the above relationship (4), M(C) refers to the set of members (fields and methods) of class C. The set-external (C) is defined as the set of members of classes other than members of C to which there exist invocations from methods in class C. Mathematically, set-external(C) may be defined by the relationship (5) below:

$$\text{set-external(C)} = \cup_{m \in F(c)} (p(m) - M(c)) \qquad - (5)$$

wherein, F(C) refers to the set of methods in class C.

The function disparateness of a given class C measures the degree of 'nonsharing' among members of C and the average distance of members of set-external(C) to members of class C. Set-external(C) is the set of members of all classes C' ≠ C, accessed by members of class C. Disparateness is considered as a measure of both cohesion and coupling. Increase in cohesion and decrease in coupling measure of the class ensures decrease in Disparateness value.

At step 46, a destination class is identified for the selected low-cohesive member (method). The destination class is identified based on the extent to which disparateness is reduced for the source and destination classes, if the low-cohesive member (method) was moved to the destination class. The key idea here is to ensure that during any movement of a member (method or an attribute from one class to another), the Disparateness value of both the source and destination classes improve (decrease).

In other words, the necessary condition for Move Method from a source class to a destination class is:

$$[\text{Disparateness } (C_{Source}) + \text{Disparateness } (C_{destnation})] \text{ before movement} \geq [\text{Disparateness } (C_{Source}) + \text{Disparateness } (C_{destnation})] \text{ after movement} \qquad - (6)$$

The above relation (6) is checked for each method in set-lcm or set of methods with low sharing by considering moving it to each and every class in the program. A class is chosen as the destination class if [Disparateness ($C_{Source}$) + Disparateness ($C_{destnation}$)] after movement minus [Disparateness ($C_{Source}$) + Disparateness ($C_{destnation}$)] before movement is negative and minimum for the class being considered as destination. The difference is zero if the source class and the destination are the same.

At step 48, the destination class determined at step 46 is suggested to the user for movement of the selected low-cohesive member from the source class. Once the user confirms movement of the selected low-cohesive member (method) into the destination class, the subsequent computations are carried out assuming that this low-cohesive member (method) is now a member of the destination class. At step 48, the selected low-cohesive member is removed from set-lcm. As every move can influence the disparateness function value of a class, the disparateness function value is recomputed in each iteration for relevant classes. Steps 44, 46 and 48 are repeated till set-lcm is empty or none of the remaining members of set-lcm satisfy the necessary condition for movement of a method given above. If the final set-lcm is non-empty, its members stay in their current classes.

The above-described embodiment advantageously fixes the low cohesive method in the class that reduces disparateness value to the greatest extent. In other words, that member (method) of set-lcm with low sharing is picked for movement into that destination class so as to reduce maximum the sum of the disparateness of the source class and the destination class by moving the method. In each iteration, the method 41 ensures that overall systemic disparateness value is reduced. The ordering is implicit in the algorithm since it fixes the element that reduces the overall Disparateness most first.

Example 2

For the sample program represented as program 1, the method 41 of FIG 3 works as follows:

```
Iteration 1
- - - - - - - - - - - -
Iteration1 : set-lcm = {A::methodA2, B::methodB1, C: :methodC1}
The tool suggests to the user to move method A::methodA2 to Destination class B.
Iteration 2
- - - - - - - - - - - -
Iteration1 : set-lcm = {B: :methodB1, C: :methodC1}
The tool suggests to the user to move method B: :methodB1 to Destination class A.
Iteration 3
- - - - - - - - - - - -
Iteration1 : set-lcm= {C: :methodC1}
```

The tool suggests to the user to move method C: :methodC1 to Destination class A.

The resulting program after all the suggested move methods are carried out is given in program 2.

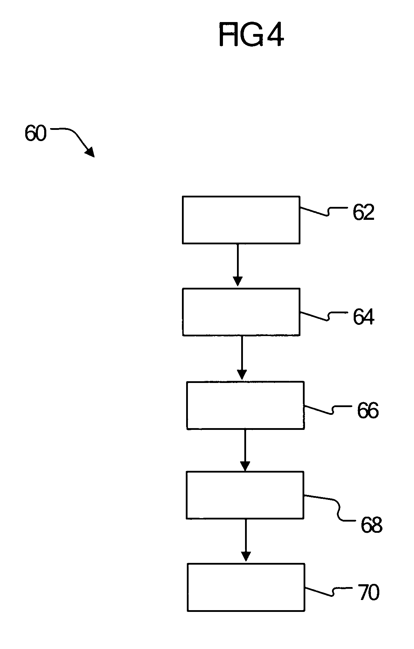

Yet another embodiment of the present invention is represented by a method 60 described with reference to FIG 4. Herein the set of low-cohesive members is formed based on a ratio that is defined based on Cohesion over Coupling. Its attempt is to place a method that lowers the cohesion over coupling ratio (also referred to as cohesion-coupling ratio) for its present class to another class where it increases this ratio. The method 60 begins at step 62 by a set of low-cohesive elements or methods, designated as set-lcm, by computing cohesion-coupling ratio for each member of the classes in an object-oriented program. Cohesion-coupling ratio for a member x in class C is defined below by the relationship (7):

$$\texttt{cohesion-coupling ratio(x,C)} = |\texttt{p(x)} \cap \texttt{M'(C)}|/|\ \texttt{p(x)} - \texttt{M'(C)}| \qquad -(7)$$

wherein
M(C) refers to the set of members of class C,

$$\texttt{M'(C)} = \texttt{M(C)} - \{\texttt{x}\},$$

and
the function p(x) is defined by
p(x), if x is a method = {x, all directly used methods, all directly used attributes},
p(x), if x is an attribute = {x, all methods using it}.

Step 64 involves selecting a low-cohesive method for movement using an ordering function. In the illustrated embodiment, the ordering function is based upon a relationship (8) defined below:

$$\texttt{DR'(x)} = |\texttt{p'(x)} \cap \texttt{set-lcm}| / |\texttt{set-lcm}| \qquad - (8)$$

Herein set-lcm represents the set of low-cohesive members identified by calculating cohesion-coupling ratio. The low-cohesive member (method) in set-lcm for which DR'(x) is least is selected for movement to a destination class in which the cohesion-coupling ratio is improved.

At step 66, a destination class is identified for the selected low-cohesive method such that when the low-cohesive method is moved to the identified destination class, the cohesion-coupling ratio with respect to the method being moved and the destination class is increased the maximum compared to the above ratio if the low-cohesive element is considered for movement to any other class.

At step 68, the destination class determined at step 66 is suggested to the user for movement of the selected low-cohesive member from the source class. Once the user confirms movement of the selected low-cohesive member (method) into the destination class, the subsequent computations are carried out assuming that this low-cohesive member (method) is now a member of the destination class. At step 70, the selected low-cohesive member is removed from set-lcm. Steps 64, 66 and 68 are repeated until the set set-lcm of low-cohesive methods is empty or consists of only those low-cohesive members that do not possess a high similarity towards any other class (and hence remain in their current classes).

Example 3

For the sample program represented as program 1, the method 60 of FIG 4 works as follows:

```
Iteration1 : Set-lcm = {A: :methodA2, B: :methodB1,
C: :methodC1}
- - - - - - - - - - - - -


        Dependency Ratio(A::methodA2) = 0
        Dependency Ratio(B: :methodB1) = 0
        Dependency Ratio(C::methodC1) = 1/3
```

The tool suggests to the user to move method A::methodA2 to Destination class B.

```
Iteration2 : Set-lcm = {B::methodB1, C::methodC1}
- - - - - - - - - - - - -


        Dependency Ratio(B::methodB1) = 0
        Dependency Ratio(C::methodC1) = 1/2
```

The tool suggests to the user to move method B::methodB1 to Destination class A.

```
Iteration3 : Set-lcm = {C::methodC1}
- - - - - - - - - - - - -
Dependency Ratio(C: :methodC1) = 0
```

The tool suggests to the user to move method C: :methodC1 to Destination class A.

The resulting program after all the suggested move methods are carried out is given in program 2.

In all the above illustrated embodiments, movement of a method from a class hierarchy or to a class hierarchy may be dealt with by method of handling inheritance, which may be illustrated as follows. Consider classes P,Q and R such that Q is derived from the base class P and R derived from Q and a method m in class P that is inherited by Q and R. If the method m is low-cohesive in classes P, Q and R, the entire inheritance hierarchy, and the method is not overridden and there exists a destination class to which method m may be moved, to improve cohesion and reduce coupling, then method m may be moved from the entire class hierarchy to the identified destination class.

Method m may be low-cohesive in class P and highly cohesive in the classes Q and R and m is not overridden in Q and R, in such a case, the movement of method m can break the source class hierarchy. The user should be informed and only if the user intends to give priority enhancing cohesion and reduce coupling even if a class hierarchy may be broken, should the tool carry out the movement of method m from the class where it is low-cohesive.

When a low-cohesive member needs to be moved to a class participating in an inheritance hierarchy and the destination class is not the bottom most in the hierarchy, it is necessary to inform the user and accept his or her suggestion regarding the movement of the member into the class participating in an inheritance hierarchy.

The embodiments described above thus can be used for automatically detecting low-cohesive members in C#/Java/C++ programs and automatically identifying destination classes wherein they enhance cohesion and reduce coupling. The proposed technique provides a basis for metrics guided refactorings Move Method and Move Field or Attribute. It is advantageous over the state of the art in refactoring as it does not expect the user to guide the tool which method or field needs to be moved to a destination class. Instead, through a metrics based analysis, the tool itself makes suggestions to a user which methods or attributes should be moved out of their current classes and to which destination classes.

The proposed technique will find applications in various software projects where design and development is object-oriented, using any of the programming languages such as C++, Java or C#. The proposed technique is advantageous in applications such as industrial automation, particularly in programmable industrial automation systems for controlling and/or adjusting automation processes or plants. Such systems generally comprise what is known as a runtime system for runtime sequence control of an automation component (machine or system), as well as what is referred to as an engineering system to create and edit control programs intended for execution in the runtime system. In many applications, the control programs generated by the engineering system are object-oriented, wherein, the proposed technique provides a useful means for enhancing cohesion and reducing coupling in such control programs.

Summarizing, The present invention deals with a technique for detecting opportunities for refactoring in an object-oriented program. The proposed technique includes identifying low-cohesive members of classes contained in said object-oriented program and forming a set of low-cohesive members. Based upon an ordering function, a low-cohesive member is selected from the set of low-cohesive members, in preference to other low-cohesive members contained in said set. A destination class is then determined and suggested to the user for moving the selected low-cohesive member from its source class. The destination class is determined based upon optimization of a cohesion characteristic of said object-oriented program.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

**Claims**

1. A method for rearranging an object-oriented program, comprising the steps of:

   a) identifying low-cohesive members of classes contained in said object-oriented program and forming a set of low-cohesive members;
   b) based upon an ordering function, selecting a low-cohesive member from said set of low-cohesive members, in preference to other low-cohesive members contained in said set,
   c) determining a destination class for moving said selected low-cohesive member from its source class, said destination class being determined based upon optimization of a cohesion characteristic of said object-oriented program,
   d) removing said selected low-cohesive member from said set of low-cohesive members, and
   e) repeating steps b), c) and d) for remaining low-cohesive members in said set of low-cohesive members.

2. The method according to claim 1, wherein the step of identifying low-cohesive members of a class comprises determining an average distance of a member with respect to other members in said class, and identifying a member as low-cohesive if the average distance exceeds a specified value,
   wherein average distance between two members x and y is defined by following relationship:

$$\texttt{distance(x,y)} = |p(x) \cap p(y)|/|\ p(x) \cup p(y)|,$$

   wherein
   the function p(x) is defined by
   p(x), if x is a method = {x, all directly used methods, all directly used attributes},
   p(x), if x is an attribute = {x, all methods using it}.

3. The method according to claim 1, wherein the step of identifying low cohesive members of a class is based upon the determination of a cohesion-coupling ratio for each member of said class,
   wherein cohesion-coupling ratio for a member x in class C is defined by the following relationship:

$$\texttt{cohesion-coupling ratio(x,C)} = |p(x) \cap M'(C)|/|\ p(x) - M'(C)|,$$

wherein
M(C) refers to the set of members of class C,
M'(C) = M(C) - {x}, and
the function p(x) is defined by
p(x), if x is a method = {x, all directly used methods, all directly used attributes},
p(x), if x is an attribute = {x, all methods using it}.

4. The method according to claim 2, wherein said ordering function is adapted for computing a dependency ratio of all low-cohesive members in said set of low-cohesive members and selecting a low-cohesive member having the least dependency ration for movement to a destination class, wherein dependency ratio for a member A of said set of low-cohesive members is defined by the following relationship:

$$\texttt{dependency ratio(A)} = \Sigma_{y \in \texttt{set-lcm}} ( \ |p(A) \cap p(y)| \ / \ |p(A)| \ ) \ / \ |\texttt{set-lcm}|,$$

wherein
set-lcm refers to said set of low-cohesive members, and
y is any member belonging to set-1cm.

5. The method according to claim 4, wherein said destination class is identified such that the difference between total cohesion of the source class and the destination class after moving said selected low-cohesive member to said destination class and total cohesion of the source class and the destination class before moving said selected low-cohesive member is maximum compared to that determined for any other class.

6. The method according to claim 2, wherein said ordering function is adapted for selecting a low-cohesive member, which, on being moved from its source class to a destination class, would result in maximum reduction of disparateness values of the source class and the destination class, wherein disparateness of a class C is defined by the following relationship:

$$\texttt{Disparateness(C)} = \Sigma_{x \in M(C)} \texttt{Distance(x,C)} / |M(C)| + \Sigma_{y \in \texttt{set-external(C)}} \texttt{Distance (y,C)} / |\texttt{set-external(C)}|,$$

wherein
M(C) refers to the set of members of class C, and
set-external(C) is defined as the set of members of classes other than members of C to which there exist invocations from methods in class C.

7. The method according to claim 6, wherein said destination class is identified such that the difference between total disparateness of the source class and the destination class after moving said selected low-cohesive member to said destination class and total disparateness of the source class and the destination class before moving said selected low-cohesive member is negative and minimum compared to that determined for any other class.

8. The method according to claim 3, wherein said ordering function is based upon a relationship given by
DR'(x) = |p'(x) ∩ set-1cm| / |set-1cm|,
wherein set-lcm represents the set of low-cohesive members identified by calculating cohesion-coupling ratio, and wherein said method further comprises selecting a low-cohesive member in set-lcm for which DR'(x) is least, for movement to a destination class.

9. The method according to claim 8, wherein said destination class is identified such that the increase in the cohesion-coupling ratio with respect to the selected low-cohesive member being moved and the identified destination class is maximum in comparison to the cohesion-coupling ratio if the said selected low-cohesive element was moved to any other class.

10. The method according to any of the preceding claims, wherein said object-oriented program comprises a control program generated by an engineering system of an industrial automation system.

11. A system for rearranging an object-oriented program, comprising:

means for identifying low-cohesive members of classes contained in said object-oriented program and forming a set of low-cohesive members;
means for selecting a low-cohesive member from said set of low-cohesive members, in preference to other low-cohesive members contained in said set, based upon an ordering function, and
means for determining a destination class for moving said selected low-cohesive member from its source class, based upon optimization of a cohesion characteristic of said object-oriented program.

12. The system according to claim 11, wherein said means for identifying low-cohesive members of a class is adapted for determining an average distance of a member with respect to other members in said class, and identifying a member as low-cohesive if the average distance exceeds a specified value, wherein average distance between two members x and y is defined by following relationship:

$$\mathtt{distance(x,y) \ = \ |p(x) \ \cap \ p(y)|/| \ p(x) \ \cup \ p(y)|,}$$

wherein
the function p(x) is defined by
p(x), if x is a method = {x, all directly used methods, all directly used attributes},
p(x), if x is an attribute = {x, all methods using it}.

13. The system according to claim 11, wherein said means for identifying low-cohesive members of a class is adapted for determination of a cohesion-coupling ratio for each member of said class,
wherein cohesion-coupling ratio for a member x in class C is defined by the following relationship:

$$\mathtt{cohesion\text{-}coupling \ ratio(x,C) \ = \ |p(x) \ \cap \ M'(C)|/| \ p(x) \ - \ M'(C)|,}$$

wherein
M(C) refers to the set of members of class C,
M'(C) = M(C) - {x}, and
the function p(x) is defined by
p(x), if x is a method = {x, all directly used methods, all directly used attributes},
p(x), if x is an attribute = {x, all methods using it}.

14. The system according to claim 12, wherein said ordering function is adapted for computing a dependency ratio of all low-cohesive members in said set of low-cohesive members and selecting a low-cohesive member having the least dependency ration for movement to a destination class, wherein dependency ratio for a member A of said set of low-cohesive members is defined by the following relationship:

$$\mathtt{dependency \ ratio(A) = \Sigma_{y \ \in \ set\text{-}lcm} \ ( \ |p(A) \ \cap \ p(y)| \ / \ |p(A)| \ ) \ / \ |set\text{-}lcm|,}$$

wherein
set-lcm refers to said set of low-cohesive members, and
y is any member belonging to set-lcm.

15. The system according to claim 14, wherein said means for identifying the destination class is adapted to identify a destination class such that the difference between total cohesion of the source class and the destination class after moving said selected low-cohesive member to said destination class and total cohesion of the source class and the destination class before moving said selected low-cohesive member is maximum compared to that determined for any other class.

16. The system according to claim 12, wherein said ordering function is adapted for selecting a low-cohesive member, which, on being moved from its source class to a destination class, would result in maximum reduction of disparateness values of the source class and the destination class, wherein disparateness of a class C is defined by the following relationship:

$$\texttt{Disparateness(C)} = \Sigma_{x \in M(C)} \texttt{Distance(x,C)} / |M(C)| + \Sigma_{y \in set\text{-}external(C)} \texttt{Distance (y,C)} / |set\text{-}external(C)|,$$

wherein
M(C) refers to the set of members of class C, and
set-external(C) is defined as the set of members of classes other than members of C to which there exist invocations from methods in class C.

17. The system according to claim 16, wherein said means for identifying the destination class is adapted to identify a destination class such that the difference between total disparateness of the source class and the destination class after moving said selected low-cohesive member to said destination class and total disparateness of the source class and the destination class before moving said selected low-cohesive member is negative and minimum compared to that determined for any other class.

18. The system according to claim 13, wherein said ordering function is based upon a relationship given by
DR'(x) = |p'(x) ∩ set-1cm| / |set-1cm|,
wherein set-lcm represents the set of low-cohesive members identified by calculating cohesion-coupling ratio, and wherein said method further comprises selecting a low-cohesive member in set-lcm for which DR'(x) is least, for movement to a destination class.

19. The system according to claim 18, wherein said means for identifying the destination class is adapted to identify a destination class such that the increase in the cohesion-coupling ratio with respect to the selected low-cohesive member being moved and the identified destination class is maximum in comparison to the cohesion-coupling ratio if the said selected low-cohesive element was moved to any other class.

20. The system according to any of claims 11-19, wherein said system belongs to an industrial automation system and wherein said object-oriented program comprises a control program generated by an engineering system of said industrial automation system.

# FIG 1

# FIG 2

30

32

34

36

38

40

# FIG 3

41

42

44

46

48

50

# FIG 4

60

```
┌──────────────┐
│              │─── 62
└──────┬───────┘
       │
       ▼
┌──────────────┐
│              │─── 64
└──────┬───────┘
       │
       ▼
┌──────────────┐
│              │─── 66
└──────┬───────┘
       │
       ▼
┌──────────────┐
│              │─── 68
└──────┬───────┘
       │
       ▼
┌──────────────┐
│              │─── 70
└──────────────┘
```

**European Patent Office**

**EUROPEAN SEARCH REPORT**

Application Number

EP 07 00 9438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON F ET AL: "Metrics based refactoring" SOFTWARE MAINTENANCE AND REENGINEERING, 2001. FIFTH EUROPEAN CONFERENCE ON MAR. 14-16, 2001, PISCATAWAY, NJ, USA,IEEE, 14 March 2001 (2001-03-14), pages 30-38, XP010537981 ISBN: 0-7695-1028-0 * abstract * * page 31, left-hand column, paragraph 2 - paragraph 4 * * page 31, right-hand column, section 2, paragraph 1 - page 32, right-hand column, end of page * * page 36, right-hand column, section 5.2, paragraph 1 - page 37m left-hand column, paragraph 1 * ----- | 1-7, 11-17 | INV. G06F9/45 |

TECHNICAL FIELDS SEARCHED (IPC)

G06F

The present search report has been drawn up for all claims

| Place of search | Date of completion of the search | Examiner |
|---|---|---|
| Munich | 2 October 2007 | Milasinovic, Goran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Metrics Based Refactoring. **SIMON, F. STEINBRUCKNER ; C. LEWERENTZ.** Proc. 5th European Conference on Software Maintenance and Reengineering. IEEE, 2001, 30-38